(19) Europäisches Patentamt / European Patent Office / Office européen des brevets

(11) EP 3 761 428 A1

(12) EUROPEAN PATENT APPLICATION
published in accordance with Art. 153(4) EPC

(43) Date of publication:
06.01.2021 Bulletin 2021/01

(51) Int Cl.:
H01M 10/052 (2010.01)   H01M 4/131 (2010.01)
H01M 4/133 (2010.01)   H01M 4/136 (2010.01)
H01M 4/36 (2006.01)   H01M 4/48 (2010.01)
H01M 4/485 (2010.01)   H01M 4/505 (2010.01)
H01M 4/525 (2010.01)   H01M 4/58 (2010.01)
H01M 4/587 (2010.01)   H01M 4/62 (2006.01)

(21) Application number: 19760548.8

(22) Date of filing: 13.02.2019

(86) International application number:
PCT/JP2019/004945

(87) International publication number:
WO 2019/167613 (06.09.2019 Gazette 2019/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.02.2018 JP 2018035772

(71) Applicant: Panasonic Intellectual Property
Management Co., Ltd.
Osaka-shi, Osaka 540-6207 (JP)

(72) Inventors:
• NIINA, Fumiharu
Osaka-shi, Osaka 540-6207 (JP)
• TUDUKI, Kouhei
Osaka-shi, Osaka 540-6207 (JP)
• YANAGIDA, Katsunori
Osaka-shi, Osaka 540-6207 (JP)

(74) Representative: Vigand, Philippe et al
Novagraaf International SA
Chemin de l'Echo 3
1213 Onex - Genève (CH)

(54) NONAQUEOUS ELECTROLYTE SECONDARY BATTERY

(57) With respect to a nonaqueous electrolyte secondary battery according to the present invention, a positive electrode active material contains a titanium-containing lithium composite oxide that has a lattice shrinkage rate during charging of 98.5% or less; and a negative electrode mixture layer comprises a first layer and a second layer, which are sequentially formed from the negative electrode collector side, while containing a polyacrylic acid or a salt thereof. The first layer and the second layer contain a carbon-based negative electrode active material; and the ratio of the D-band/G-band ratio (B) of the Raman spectroscopy spectrum of the second layer to the D-band/G-band ratio (A) of Raman spectroscopy spectrum of the first layer, namely the ratio B/A is 2-10. The concentration of the polyacrylic acid or a salt thereof in the first layer is higher than the concentration of the polyacrylic acid or a salt thereof in the second layer.

Figure 1

## Description

Technical Field

The present disclosure relates to a nonaqueous electrolyte secondary battery.

Background Art

PTL 1 discloses a nonaqueous electrolyte secondary battery in which a polyacrylic acid is used as a binder of a negative electrode mix layer so as to improve the battery performance, for example, cycle characteristics. Meanwhile, PTL 2 discloses a positive electrode active material that is used for a nonaqueous electrolyte secondary battery and that is obtained by performing firing in the state in which an element of group IVB to VIB of the periodic table, for example, Ti, exists on the surface of a lithium nickel complex oxide. PTL 2 discloses that the resistance of a battery after storage at a high temperature can be suppressed from increasing.

Citation List

Patent Literature

PTL 1: Japanese Published Unexamined Patent Application No. 2000-348730
PTL 2: Japanese Published Unexamined Patent Application No. 2004-253305

Summary of Invention

Regarding nonaqueous electrolyte secondary batteries, it is an important issue to suppress the resistance of a battery after storage at a high temperature from increasing while favorable cycle characteristics are ensured. There is room for further improvement in technologies in the related art including the technologies disclosed in PTL 1 and PTL 2 with respect to suppressing the resistance after storage at a high temperature from increasing.

A nonaqueous electrolyte secondary battery according to an aspect of the present disclosure includes a positive electrode containing a positive electrode active material, a negative electrode including a negative electrode mix layer disposed on a negative electrode collector, and a nonaqueous electrolyte, wherein the positive electrode active material contains a titanium-containing lithium composite oxide that has a lattice shrinkage in charged state of 98.5% or less, the negative electrode mix layer contains a polyacrylic acid or a salt thereof and includes a first layer and a second layer disposed successively from the negative electrode collector, each of the first layer and the second layer contains a carbon-based negative electrode active material, the ratio (B/A) of the D-band/G-band ratio (B) of the Raman spectrum of the second layer to the D-band/G-band ratio (A) of the Raman spectrum of the first layer is 2 to 10, and the concentration of the polyacrylic acid or a salt thereof in the first layer is higher than the concentration of the polyacrylic acid or a salt thereof in the second layer.

Regarding nonaqueous electrolyte secondary battery according to an aspect of the present disclosure, the resistance after storage at a high temperature can be suppressed from increasing while favorable cycle characteristics are ensured.

Brief Description of Drawings

[Figure 1] Figure 1 is a sectional view of a nonaqueous electrolyte secondary battery that is an example of an embodiment.
[Figure 2] Figure 2 is a sectional view of a negative electrode that is an example of an embodiment.

Description of Embodiments

In the case in which a titanium-containing lithium composite oxide that has a lattice shrinkage in charged state of 98.5% or less is used as a positive electrode active material, a nonaqueous electrolyte secondary battery having, for example, high capacity and high safety can be provided. In addition, in the case in which a polyacrylic acid is used as a binder of a negative electrode mix layer, adhesion between active materials and adhesion between an active material and a collector are not readily degraded, and favorable cycle characteristics are obtained. Meanwhile, it was found that, in the case in which such a positive electrode active material was used and a polyacrylic acid was added to the negative electrode mix layer, the resistance after storage at a high temperature increased to a great extent.

The present inventors performed intensive research to address the above-described problem and, as a result, succeeded in suppressing the resistance after storage at a high temperature from increasing while favorable cycle characteristics were ensured by using a negative electrode mix layer in which a first layer and a second layer were disposed successively from the negative electrode collector, in which the amount of amorphous carbon in a carbon-based negative electrode active material of the first layer was set to be less than that of the second layer, and in which the concentration of the polyacrylic acid or a salt thereof in the first layer was set to be greater than that of the second layer. It is conjectured that the polyacrylic acid existing in a large amount in the second layer forms a high-resistance coating film on the negative electrode surface and increases the battery resistance to a great extent. Regarding the nonaqueous electrolyte secondary battery according to an aspect of the present disclosure, appropriately adjusting the amount of polyacrylic acid and the amount of amorphous carbon in the carbon-based negative electrode active material in the first layer and the second layer of the negative electrode mix layer particularly suppresses the resistance after storage at a high temperature from increasing.

An example of an embodiment will be described below in detail. Hereafter a cylindrical battery in which a rolled electrode body 14 is stored in a cylindrical battery case is exemplified. However, the electrode body is not limited to the roll type and may be a multilayer type in which a plurality of positive electrodes and a plurality of negative electrodes are alternately stacked with separators interposed therebetween. Alternatively, the nonaqueous electrolyte secondary battery according to the present disclosure may be a square battery provided with a square metal case, a coin-type battery provided with a coin-type metal case, or the like or a laminate battery provided with an outer jacket member composed of a laminate sheet including a metal layer and a resin layer.

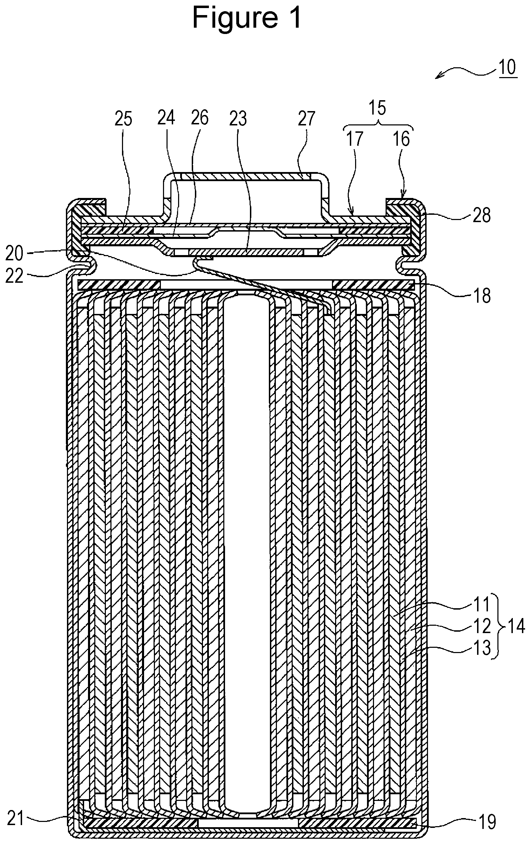

Figure 1 is a sectional view of a nonaqueous electrolyte secondary battery 10 that is an example of the embodiment. As exemplified in Figure 1, the nonaqueous electrolyte secondary battery 10 includes an electrode body 14, a nonaqueous electrolyte (not shown in the drawing), and a battery case 15 for storing the electrode body 14 and the nonaqueous electrolyte. The electrode body 14 includes a positive electrode 11, a negative electrode 12, and a separator 13 and has a rolling structure in which the positive electrode 11 and the negative electrode 12 are rolled with the separator 13 interposed therebetween. The battery case 15 is composed of an outer jacket can 16 having a cylindrical shape with a bottom and a sealing body 17 that seals the opening portion of the outer jacket can 16.

The nonaqueous electrolyte secondary battery 10 has insulating plates 18 and 19 arranged on the top and bottom, respectively, of the electrode body 14. In the example shown in Figure 1, a positive electrode lead 20 attached to the positive electrode 11 extends toward the sealing body 17 through a through hole of the insulating plate 18, and a negative electrode lead 21 attached to the negative electrode 12 extends toward the bottom portion of the outer jacket can 16 while passing outside the insulating plate 19. The positive electrode lead 20 is connected to the lower surface of a filter 23 that is a bottom plate of the sealing body 17 by welding or the like, and a cap 27 that is electrically connected to the filter 23 and that is a top plate of the sealing body 17 serves as a positive electrode terminal. The negative electrode lead 21 is connected to the inner surface of the bottom portion of the outer jacket can 16 by welding or the like, and the outer jacket can 16 serves as a negative electrode terminal.

The outer jacket can 16 is, for example, a metal container having a cylindrical shape with a bottom. A gasket 28 is disposed between the outer jacket can 16 and the sealing body 17 so as to ensure the sealing performance inside the battery. The outer jacket can 16 is provided with an overhanging portion 22 that is, for example, part of the side surface portion overhanging inward and that supports the sealing body 17. Preferably, the overhanging portion 22 is formed into an annular shape in the circumferential direction of the outer jacket can 16, and the upper surface of the overhanging portion 22 supports the sealing body 17.

The sealing body 17 has a structure in which the filter 23, a lower valve body 24, an insulating member 25, an upper valve body 26, and the cap 27 are stacked successively from the electrode body 14. Each member constituting the sealing body 17 has, for example, a disc shape or a ring shape, and the members excluding the insulating member 25 are electrically connected to each other. The center portion of the lower valve body 24 and the center portion of the upper valve body 26 are connected to each other, and the insulating member 25 is interposed between the peripheral edge portions of the lower valve body 24 and the upper valve body 26. When the internal pressure of the battery is increased due to irregular heat generation, the lower valve body 24 is deformed so as to push up the upper valve body 26 toward the cap 27 and is ruptured, and, as a result, a current path between the lower valve body 24 and the upper valve body 26 is cut off. When the internal pressure is further increased, the upper valve body 26 is ruptured, and gas is discharged through an opening portion of the cap 27.

The positive electrode, the negative electrode, the separator, and the nonaqueous electrolyte, in particular, the positive electrode and the negative electrode, will be described below in detail.

[Positive electrode]

The positive electrode 11 has a positive electrode collector and a positive electrode mix layer disposed on the positive electrode collector. Foil of a metal that is stable in the potential range of the positive electrode 11, for example, aluminum, a film provided with the metal on the surface layer, or the like may be used for the positive electrode collector. Preferably, the positive electrode mix layer contains a positive electrode active material, a conductive material, and a binder and is disposed on both surfaces of the positive electrode collector. The positive electrode 11 may be produced by, for example, coating the positive electrode collector with a positive electrode mix slurry containing the positive electrode active material, the conductive material, the binder, and the like, drying the coating film, and performing compression so as to form positive electrode mix layers on the respective surfaces of the positive electrode collector. An example of the thickness of the positive electrode mix layer on one surface of the positive electrode collector is 20 $\mu$m to 120 $\mu$m.

The positive electrode active material contains a titanium-containing lithium composite oxide that has a lattice shrinkage in charged state of 98.5% or less. The positive electrode mix layer may contain a positive electrode active material other than the titanium-containing lithium composite oxide within the bounds of not impairing the purpose of the present disclosure. The titanium-containing lithium composite oxide is contained in an amount of preferably 80% to 100% by mass relative to the total mass of the positive electrode active material. The lattice shrinkage in charged state is preferably 90% or more. Using the lithium complex oxide having a lattice shrinkage in charged state of 98.5% or less enables the capacity of the battery to be increased. The lattice shrinkage of the positive electrode active material may be measured by the method shown in the example described later. Using the titanium-containing lithium composite oxide enables heat generation due to occurrence of an abnormal condition, for example, internal short circuit, to be reduced.

Preferably, the titanium-containing lithium composite oxide contains a metal element other than Li and Ti. Examples of the metal element include Ni, Co, Mn, Al, B, Mg, V, Cr, Fe, Cu, Zn, Ga, Sr, Zr, Nb, In, Sn, Ta, W, Mo, and Si. The titanium-containing lithium composite oxide is, for example, a complex oxide containing at least one of Ni, Co, Mn, and Al in addition to Li and Ti. The proportion of Ni is preferably 40% to 95% by mole and more preferably 50% to 90% by mole relative to the total number of moles of metal elements excluding Li. The proportion of Ti is preferably 0.1% to 5% by mole and more preferably 0.5% to 3% by mole.

Specific examples of the favorable titanium-containing lithium composite oxide include complex oxides denoted by a general formula $Li_\alpha Ni_{1-x-y}M_x Ti_y O_\beta$ (M contains at least one of Co, Mn, and Al, $0.80 \leq \alpha \leq 1.2$, $0.05 < x \leq 0.6$, $0.001 < y < 0.05$, and $1.8 \leq \beta \leq 2.3$). For example, Ti is added to the complex oxide by mixing a titanium compound such as titanium oxide to a nickel cobalt manganese complex oxide and by performing firing. Preferably, Ti in the lithium complex oxide is in the form of a solid solution. Part of Ti may exist as titanium oxide or lithium titanate at grain boundaries or on the surface of the lithium complex oxide.

Examples of the conductive material contained in the positive electrode mix layer include carbon materials such as carbon black, acetylene black, ketjenblack, and graphite. Examples of the binder contained in the positive electrode mix layer include fluororesins such as polytetrafluoroethylenes (PTFE) and polyvinylidene fluorides (PVdF), polyacrylonitriles (PAN), polyimide resins, acrylic resins, and polyolefin resins. These resins may be used in combination with cellulose derivatives such as carboxymethyl cellulose (CMC) or salts thereof, polyethylene oxides (PEO), or the like.

[Negative electrode]

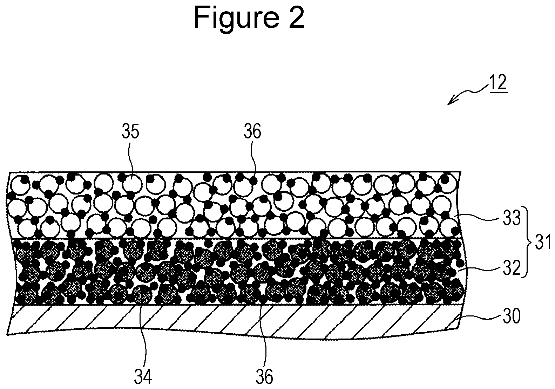

Figure 2 is a sectional view of the negative electrode 12. As exemplified in Figure 2, the negative electrode 12 has a negative electrode collector 30 and a negative electrode mix layer 31 disposed on the negative electrode collector 30. Foil of a metal that is stable in the potential range of the negative electrode 12, for example, copper, a film provided with the metal on the surface layer, or the like may be used for the negative electrode collector 30. Preferably, the negative electrode mix layer 31 contains a negative electrode active material and a binder and is disposed on both surfaces of the negative electrode collector 30. The negative electrode 12 may be produced by, for example, coating the negative electrode collector 30 with a negative electrode mix slurry containing the negative electrode active material, the binder, and the like, drying the coating film, and performing compression so as to form negative electrode mix layers 31 on the respective surfaces of the negative electrode collector 30.

The negative electrode mix layer 31 contains PAA 36 and includes a first layer 32 and a second layer 33 disposed successively from the negative electrode collector 30. In this regard, PAA denotes a polyacrylic acid (PAA) or a salt thereof. Each of the first layer 32 and the second layer 33 contains a carbon-based negative electrode active material. Carbon-based negative electrode active materials having peak intensity ratios of D-band/G-band different from each other are added to the first layer 32 and the second layer 33, respectively. For example, a first carbon-based negative electrode active material 34 is added to the first layer 32, and a second carbon-based negative electrode active material 35 containing a greater amount of amorphous carbon than the first carbon-based negative electrode active material 34 is added to the second layer 33. The negative electrode mix layer 31 may include a third layer but preferably has a two-layer structure composed of the first layer 32 and the second layer 33.

In the Raman spectrum of a carbon-based negative electrode active material, a peak of G-band derived from a graphite structure appears at about 1,590 cm$^{-1}$, and a peak of D-band derived from a defect appears at about 1,350 cm$^{-1}$. The peak intensity ratio of D-band/G-band can be used as an indicator of the amount of amorphous carbon, and a higher ratio indicates that the amount of amorphous carbon is larger.

In the negative electrode mix layer 31, the concentration of PAA 36 in the first layer 32 is higher than the concentration of PAA 36 in the second layer 33. PAA 36 enhances adhesion between active materials in the negative electrode mix layer 31 and adhesion between the active material and the negative electrode collector 30 and contributes to an improvement of the cycle characteristics. Therefore, it is preferable that PAA 36 be added to at least the first layer 32. On the other hand, the second layer 33 is not limited to containing PAA 36, and in the case in which PAA 36 is contained, it is preferable that the concentration be lower than the concentration of PAA 36 in the first layer 32.

The battery resistance can be suppressed from increasing while favorable non-adhesion of the negative electrode mix layer 31 is ensured by setting the ratio (B/A) of the D-band/G-band ratio (B) of the Raman spectrum of the second layer 33 to the D-band/G-band ratio (A) of the Raman spectrum of the first layer 32 to be 2 to 10 or by setting the amounts of PAA 36 added to the first layer 32 and the second layer 33 to satisfy that the first layer 32 is greater than the second layer 33. In this case, it is conjectured that since a high-resistance coating film is not readily formed on the surface of the negative electrode 12, the resistance after storage at a high temperature is suppressed from increasing.

Each of the carbon-based negative electrode active material (first carbon-based negative electrode active material 34 and second carbon-based negative electrode active material 35) is a negative electrode active material formed of a carbon material and, preferably, contains graphite as a primary component. Examples of the graphite include natural graphite such as flake graphite, vein graphite, and amorphous graphite and artificial graphite such as massive artificial graphite and graphitized mesophase carbon microbeads (MCMB). Regarding the negative electrode mix layer 31, negative electrode active materials other than the carbon material, for example, metals such as Si and Sn that are alloyed with lithium, alloys containing such metals, and compounds containing such metals may be used in combination.

Examples of negative electrode active material other than the carbon material include silicon compounds. An example of favorable silicon compounds is the silicon oxide denoted by $SiO_x$ ($0.5 \leq x \leq 1.6$). The silicon oxide denoted by $SiO_x$ has a structure in which Si fine particles are dispersed in an amorphous $SiO_2$ matrix. The silicon compound may be the compound denoted by $Li_{2y}SiO_{(2+y)}$ ($0 < y < 2$) in which Si fine particles are dispersed in a lithium silicate phase.

It is preferable that a conductive coating film composed of a material having higher conductivity than the silicon oxide be disposed on the particle surfaces of the silicon oxide denoted by $SiO_x$. Examples of the constituent material of the conductive coating film include at least one selected from carbon materials, metals, and metal compounds. Of these, carbon materials such as amorphous carbon materials are preferable. The carbon coating film may be formed by, for example, a CVD method in which acetylene, methane, or the like is used or a method in which coal pitch, petroleum pitch, a phenol resin, or the like is mixed with $SiO_x$ particles and heat treatment is performed. Alternatively, the conductive coating film may be formed by fixing a conductive filler such as carbon black to particle surfaces of $SiO_x$ by using a binder.

The content of the carbon-based negative electrode active material is preferably 80% to 99% by mass and more preferably 85% to 98.5% by mass relative to the total mass of the negative electrode mix layer 31. The concentration of the carbon-based negative electrode active material in the second layer 33 may be higher than the concentration of the carbon-based negative electrode active material in the first layer 32. In the case in which a silicon compound is used in combination as the negative electrode active material, the silicon compound may be contained in the first layer 32 only, or the concentrations of the silicon compound in the first layer 32 and the second layer 33 may be set to satisfy that the first layer 32 is greater than the second layer 33. The mixing ratio of the silicon compound to the carbon-based negative electrode active material is, for example, 1:99 to 20:80 and preferably 5:95 to 15:85 on a mass ratio basis.

The D-band/G-band ratio (A, B) is determined by subjecting the cross section of each layer to Raman spectroscopic measurement. For example, in the case in which the first carbon-based negative electrode active material 34 only is contained as the carbon-based negative electrode active material in the first layer 32, the D-band/G-band ratio (A) is the ratio (A) of the first carbon-based negative electrode active material 34. The ratio (B/A) of the D-band/G-band ratio (B) of the Raman spectrum of the second layer 33 to the D-band/G-band ratio (A) of the Raman spectrum of the first layer 32 is more preferably 4 to 6.

The D-band/G-band ratio (A) of the first carbon-based negative electrode active material 34 is preferably 0.05 to 0.2. The D-band/G-band ratio (B) of the second carbon-based negative electrode active material 35 is preferably 0.1 to 2.0.

Preferably, the second carbon-based negative electrode active material 35 is composed of a carbon material containing a greater amount of amorphous carbon than the first carbon-based negative electrode active material 34. It is conjectured that since a high-resistance coating film is not readily formed on the surface of the negative electrode 12 by increasing the amount of amorphous carbon in the second layer 33, the resistance after storage at a high temperature is suppressed from increasing. In this regard, the second carbon-based negative electrode active material 35 may be mixed into the first layer 32 and the first carbon-based negative electrode active material 34 may be mixed into the second layer 33 provided that the concentration of the amorphous carbon in the first layer 32 is lower than the second layer 33 as the whole of the first layer 32 and second layer 33. However, in this case, it is preferable that the amount of the second carbon-based negative electrode active material 35 contained in the second layer 33 be more than the amount of the first carbon-based negative electrode active material 34 contained in the second layer 33.

In the present specification, the amorphous carbon is carbon in which a graphite crystal structure is not developed and is carbon in an amorphous or microcrystalline state with a turbostratic structure, and more specifically, the amorphous carbon is denoted by the d(002) spacing based on X-ray diffraction being 0.342 nm or more. Specific examples of the amorphous carbon include hard carbon (non-graphitizable carbon), soft carbon (graphitizable carbon), carbon black, carbon fiber, and activated carbon. There is no particular limitation regarding the method for manufacturing these. The amorphous carbon is obtained by, for example, subjecting a resin or a resin composition to carbonization treatment. Regarding the raw material for forming the amorphous carbon, phenolic thermosetting resins, thermoplastic resins such as polyacrylonitriles, petroleum- or coal-based tar or pitch, and the like may be used. Meanwhile, for example, carbon black is obtained by thermally decomposing (thermal decomposition method, incomplete combustion method) hydrocarbons serving as the raw materials. Examples of the thermal decomposition method include a thermal method and an acetylene decomposition method. Examples of the incomplete combustion method include a contact method, a lamp·turpentine-soot method, a gas furnace method, and an oil furnace method. Specific examples of carbon black formed by these methods include acetylene black, ketjenblack, thermal black, and furnace black. In this regard, the surface of the amorphous carbon may be coated with another amorphous carbon.

Preferably, the amorphous carbon exists in the state of being fixed to the surface of graphite-based carbon. In this regard, being fixed is a state of being chemically and/or physically bonded and denotes that amorphous carbon is not isolated from the surface of the graphite-based carbon even when the negative electrode active material is agitated in water or an organic solvent. The physical properties and the amount of fixation of the amorphous carbon in the carbon-based negative electrode active material may be adjusted by, for example, the type and the amount of raw material (for example, petroleum- or coal-based tar or pitch), the temperature and the time of the carbonization treatment, and the like.

There is no particular limitation regarding the thickness of each of the first layer 32 and the second layer 33. The thickness of the second layer 33 is preferably 20% to 70% and more preferably 20% to 40% of the thickness of the negative electrode mix layer 31. The first layer 32 may be thicker than the second layer 33 and has a thickness of, for example, 30% to 80% or 60% to 80% of the thickness of the negative electrode mix layer 31. An example of the ratio of the thickness of the second layer 33 to the thickness of the first layer 32 is 0.5 to 2.5. An example of the thickness of the negative electrode mix layer 31 is 20 $\mu$m to 120 $\mu$m surface of the negative electrode collector 30.

In the negative electrode mix layer 31, PAA 36 is contained in at least the first layer 32. The content of PAA 36 in the first layer 32 is preferably 0.1% to 3% by mass and more preferably 0.5% to 2% by mass relative to the total mass of the first layer 32. Meanwhile, PAA 36 exists in an amount of preferably 0.1 to 3 parts by mass relative to 100 parts by mass of first carbon-based negative electrode active material 34. The content of PAA 36 in the second layer 33 is preferably 0 to 1.5% by mass and more preferably 0 to 1% by mass relative to the total mass of the second layer 33. As described above, the second layer 33 may contain substantially no PAA 36. The concentration of PAA 36 is measured by microscopic Raman spectroscopy or SEM-EDX. The concentration of PAA 36 in the second layer 33 may be less than or equal to the lower limit of the measurement by microscopic Raman spectroscopy and SEM-EDX.

Regarding PAA 36, for example, a polyacrylic acid salt in which some carboxylic acid groups of a polyacrylic acid that is a polymer of acrylic acid are neutralized is used. Examples of the polyacrylic acid salt include lithium polyacrylates, sodium polyacrylates, and ammonium polyacrylates. A favorable example of the polyacrylic acid salts is a lithium polyacrylate (PAA-Li). There is no particular limitation regarding the weight average molecular weight (Mw) of PAA 36, and Mw is preferably 1,000 to 500,000. At least two types of PAA 36 having different degree of neutralization, Mw, and the like may be added to the negative electrode mix layer 31.

It is preferable that a binder other than PAA 36 may be used in combination for the negative electrode mix layer 31. Regarding the other binder, fluororesins, PAN, polyimide resins, acrylic resins, polyolefin resins, and the like may be used as in the positive electrode. However, preferably, styrene butadiene rubber (SBR) is used. In addition, regarding the negative electrode mix layer 31, CMC or salts thereof, polyvinyl alcohols (PVA), and the like may be contained. CMC or salts thereof, PVA, and the like have, for example, a function of adjusting the viscosity of the negative electrode mix slurry and, in addition, a function of a binder. In the case in which other binders, for example, SBR, are used in combination, the content of the binder is preferably 0.1% to 3% by mass and more preferably 0.5% to 2% by mass relative to the total mass of the negative electrode mix layer 31.

In the negative electrode mix layer 31, PAA 36 may be contained with a concentration gradient such that the concentration decreases with increasing proximity to the surface of the second layer 33. That is, in the negative electrode mix layer 31, there may be a concentration gradient such that the concentration of PAA 36 decreases with increasing proximity to the surface of the second layer 33 and the concentration of the PAA 36 increases with increasing proximity to the negative electrode collector 30. For example, the first layer 32 and the second layer 33 may contain SBR, and substantially no PAA 36 may exist in the entire second layer 33 or at least on the surface of the second layer 33.

[Separator]

Regarding the separator 13, a porous sheet having ion permeability and insulation performance is used. Specific examples of the porous sheet include microporous thin films, woven fabrics, and nonwoven fabrics. Olefin resins such as polyethylenes and polypropylenes, celluloses, and the like are suitable for the material for forming the separator 13. The separator may have either a single-layer structure or a multilayer structure. A heat-resistant layer or the like may be disposed on the surface of the separator 13.

[Nonaqueous electrolyte]

The nonaqueous electrolyte contains a nonaqueous solvent and an electrolyte salt dissolved in the nonaqueous solvent. Regarding the nonaqueous solvent, for example, esters, ethers, nitriles such as acetonitrile, and amides such as dimethylformamide and mixed solvents of at least two of these may be used. The nonaqueous solvent may contain a halogen substitution product in which at least some hydrogen atoms of the solvent are substituted with halogen atoms such as fluorine. Examples of the halogen substitution product include fluorinated cyclic carbonic acid esters such as fluoroethylene carbonate (FEC), fluorinated chain carbonic acid esters, and fluorinated chain carboxylic acid esters such as methyl fluoropropionate (FMP).

Examples of the esters include cyclic carbonic acid esters such as ethylene carbonate (EC), propylene carbonate (PC), and butylene carbonate, chain carbonic acid esters such as dimethyl carbonate (DMC), ethyl methyl carbonate (EMC), diethyl carbonate (DEC), methyl propyl carbonate, ethyl propyl carbonate, and methyl isopropyl carbonate, cyclic carboxylic acid esters such as $\gamma$-butyrolactone (GBL) and $\gamma$-valerolactone (GVL), and chain carboxylic acid esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

Preferably, the electrolyte salt is a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ ($1 < x < 6$, n is 1 or 2), $LiB_{10}Cl_{10}$, LiCl, LiBr, LiI, lithium chloroborane, lower aliphatic lithium carboxylates, boric acid salts such as $Li_2B_4O_7$ and $Li(B(C_2O_4)F_2)$, and imide salts such as $LiN(SO_2CF_3)_2$ and $LiN(C_lF_{2l+1}SO_2)(C_mF_{2m+1}SO_2)$ {l and m are integers of 0 or more}. Regarding the lithium salt, these may be used alone, or a plurality of types may be used in combination. Of these, it is preferable that $LiPF_6$ be used from the viewpoint of ionic conductivity, electrochemical stability, and the like. The concentration of the lithium salt is, for example, 0.8 to 4.0 mol per liter of nonaqueous solvent.

EXAMPLES

The present disclosure will be further described below with reference to the examples. However, the present disclosure is not limited to the examples.

<Example 1>

[Synthesis of positive electrode active material]

A nickel cobalt manganese complex hydroxide obtained by coprecipitation was fired at 500°C so as to obtain a nickel cobalt manganese complex oxide. Subsequently, lithium hydroxide, the nickel cobalt manganese complex oxide, and titanium oxide ($TiO_2$) were mixed so that the molar ratio of Li to the total amount of Ni, Co, and Mn to Ti in $TiO_2$ was set to be 1.08:1:0.01. The resulting mixture was fired in an air atmosphere at 900°C for 20 hours, and pulverization was performed so as to obtain a lithium complex oxide containing Ti in the form of a solid solution (positive electrode active material). It was identified by TEM-EDX that Ti in the complex oxide was in the form of a solid solution. In this regard, as a result of composition analysis by ICP, the composition of the oxide was $Li_{1.03}Ni_{0.48}Co_{0.19}Mn_{0.29}Ti_{0.01}O_2$.

[Production of positive electrode]

The above-described positive electrode active material, acetylene black, and PVdF were mixed at a mass ratio of 100:1:1, and an appropriate amount of N-methyl-2-pyrrolidone was added. Subsequently, kneading was performed so as to prepare a positive electrode mix slurry. Both surfaces of a positive electrode collector composed of aluminum foil were coated with the resulting positive electrode mix slurry, the coating film was dried, and, thereafter, the coating film was rolled by using a roller. Cutting into a predetermined electrode size was performed so as to produce a positive electrode in which both surfaces of the positive electrode collector were provided with the positive electrode mix layer. In this regard, part of the positive electrode was set to be an exposed portion at which the surface of the positive electrode collector was exposed.

[Preparation of first negative electrode mix slurry]

Carbon material A (first carbon-based negative electrode active material), $SiO_x$ (x = 1) having a carbon coating film, CMC-Na, a dispersion of SBR, and a dispersion of PAA at a solid content mass ratio of 94:6:1:1:1.5 were mixed in water so as to prepare a first negative electrode mix slurry for a first layer.

[Preparation of second negative electrode mix slurry]

Carbon material B (second carbon-based negative electrode active material), $SiO_x$ (x = 1) having a carbon coating film, CMC-Na (sodium carboxymethyl cellulose), and a dispersion of SBR at a solid content mass ratio of 94:6:1:1 were mixed in water so as to prepare a second negative electrode mix slurry for a second layer.

[Production of negative electrode]

Both surfaces of a negative electrode collector composed of copper foil were coated with the first negative electrode mix slurry and the coating film was dried so as to form the first layer on both surfaces of the negative electrode collector. Thereafter, the first layer was coated with the second negative electrode mix slurry and the coating film was dried so as to form the second layer. Subsequently, the coating films were rolled by using a roller. Cutting into a predetermined electrode size was performed so as to produce a negative electrode in which both surfaces of the negative electrode collector were provided with the negative electrode mix layer including the first layer and the second layer. The mass and the thickness of each of the first layer and the second layer were measured. As a result, the mass ratio of second layer/first layer was 0.5, and the thickness ratio of second layer/first layer was 0.5. Meanwhile, part of the negative electrode was set to be an exposed portion at which the surface of the negative electrode collector was exposed.

[Preparation of nonaqueous electrolyte]

$LiPF_6$ was dissolved into a mixed solvent in which EC, EMC, and DMC were mixed at a volume ratio of 3:3:4 so that the concentration became 1.0 mol/liter. Further, vinylene carbonate (VC) was dissolved into the above-described mixed solvent at a concentration of 1.0% by mass so as to prepare a nonaqueous electrolyte.

[Production of battery]

The above-described positive electrode and the above-described negative electrode were stacked with a polyolefin separator interposed therebetween, an aluminum positive electrode lead was welded to the overlapping exposed portions of the positive electrode, and an aluminum negative electrode lead was welded to the overlapping exposed portions of the negative electrode so as to produce a multilayer type electrode body. The resulting electrode body was stored into an electrode outer jacket member composed of an aluminum laminate sheet, and the above-described nonaqueous electrolyte was injected. Thereafter, the outer jacked member was sealed so as to produce a nonaqueous electrolyte secondary battery of 650 mAh.

[Measurement of amount of amorphous material in carbon-based negative electrode active material]

The amount of the amorphous material in the carbon-based negative electrode active material contained in the negative electrode mix layer (first layer and second layer) was evaluated on the basis of Raman spectroscopic measurement. As described above, the peak intensity ratio of D-band/G-band in the Raman spectrum of a carbon-based negative electrode active material can be used as an indicator of the amount of amorphous carbon, and a higher ratio indicates that the amount of amorphous carbon is larger. The first layer and the second layer were subjected to the Raman spectroscopic measurement, and the D-band/G-band ratio of each layer was determined. In Table 1, A indicates the D-band/G-band ratio of the first layer, and B indicates the D-band/G-band ratio of the second layer.

[Evaluation of resistance increasing rate after storage]

The produced nonaqueous electrolyte secondary battery was subjected to constant-current charging at a constant current of 0.3 lt in a temperature environment of 25°C until the voltage reached 4.2 V. Subsequently, constant-voltage charging was performed at a constant voltage of 4.2 V until the current reached 1/20 lt. In the resulting charged state, a 14-day storage test was performed in a temperature environment of 60°C. After the storage test, charging was performed at a constant current of 0.3 lt to a half of a rated capacity (SOC of 50%), and the resulting state was left to stand for 15 minutes. Subsequently, charging was performed at a current of 0.1 lt for 10 seconds, and the voltage at this time was measured. After the capacity charged for 10 seconds was discharged, charging was performed for 10 seconds at a different current, the voltage at this time was measured, and the capacity charged for 10 seconds was discharged. The above-described charging, discharging, and voltage measurement were repeated while the current was changed in the range of 0.1 lt to 2 lt. The voltages after 10 seconds at respective currents were plotted, and the gradient was calculated and denoted as the resistance. The resistance increasing rate was calculated from the resistance after storage relative to the resistance before storage. The resistance increasing rate shown in Table 1 is a relative value provided that the resistance increasing rate in comparative example 1 described later is assumed to be 100.

[Evaluation of lattice shrinkage in charged state of positive electrode active material]

A three-electrode battery was produced while the produced positive electrode was set to be a working electrode, metal lithium was set to be a counter electrode (negative electrode) and a reference electrode, and the above-described nonaqueous electrolyte was used. The three-electrode battery was subjected to constant-current charging at a constant current of 0.3 lt in a temperature environment of 25°C until the voltage reached 4.3 V (vs. Li/Li$^+$) and constant-voltage charging was performed at a constant voltage of 4.3 V (vs. Li/Li$^+$) until the current reached 1/20 lt. Thereafter, the battery was disassembled and the positive electrode was removed. The resulting positive electrode was subjected to XRD measurement so as to calculate the lattice constant in the charged state. Likewise, constant-current discharging was performed at a constant current of 0.3 lt in a temperature environment of 25°C until the voltage reached 2.5 V (vs. Li/Li$^+$). Thereafter, the battery was disassembled and the positive electrode was removed. The resulting positive electrode was subjected to XRD measurement so as to calculate the lattice constant in the discharged state.

$$\text{lattice shrinkage in charged state} = (\text{lattice constant in charged state}/\text{lattice constant in discharged state}) \times 100$$

The evaluation results are shown in Table 1.

<Example 2>

A battery was produced in the same manner as in example 1 except that, in the synthesis of the positive electrode active material, the base composition of the nickel cobalt manganese complex oxide was changed to $Li_{1.01}Ni_{0.83}Co_{0.10}Mn_{0.05}Ti_{0.01}O_2$, and the same performance evaluation as in example 1 was performed.

<Example 3>

A battery was produced in the same manner as in example 1 except that, in the preparation of the first negative electrode mix slurry, carbon material A, SiO$_x$, CMC-Na, a dispersion of SBR, and a dispersion of PAA were mixed at a solid content mass ratio of 91:9:0.85:1:1 and except that, in the preparation of the second negative electrode mix slurry, carbon material B, CMC-Na, and a dispersion of PAA were mixed at a solid content mass ratio of 100:1.3:0.5, and the same performance evaluation as in example 1 was performed.

<Example 4>

A battery was produced in the same manner as in example 3 except that a material having a D-band/G-band ratio of 0.47 was used as carbon material B, and the same performance evaluation as in example 3 was performed.

<Comparative example 1>

A battery was produced in the same manner as in example 1 except that, in the preparation of the positive

electrode active material, $TiO_2$ was not added and except that, in production of the negative electrode, a single layer of negative electrode mix layer was formed on both surfaces of the negative electrode collector by using a slurry in which the first negative electrode mix slurry and the second negative electrode mix slurry were mixed at a mass ratio of 2:1, and the same performance evaluation as in example 1 was performed.

<Comparative example 2>

A battery was produced in the same manner as in example 1 except that, in production of the negative electrode, a single layer of negative electrode mix layer was formed on both surfaces of the negative electrode collector by using a slurry in which the first negative electrode mix slurry and the second negative electrode mix slurry were mixed at a mass ratio of 2:1, and the same performance evaluation as in example 1 was performed.

<Comparative example 3>

A battery was produced in the same manner as in example 1 except that, in preparation of the first negative electrode mix slurry and the second negative electrode mix slurry, the carbon-based negative electrode active material in which carbon material A and carbon material B were mixed at a mass ratio of 2:1 was used, and the same performance evaluation as in example 1 was performed.

<Comparative example 4>

A battery was produced in the same manner as in example 1 except that, in the preparation of the first negative electrode mix slurry, carbon material A, $SiO_x$, CMC-Na, a dispersion of SBR, and a dispersion of PAA were mixed at a solid content mass ratio of 94:6:1:1:1 and except that, in the preparation of the second negative electrode mix slurry, carbon material B, $SiO_x$, CMC-Na, a dispersion of SBR, and a dispersion of PAA were mixed at a solid content mass ratio of 94:6:1:1:1, and the same performance evaluation as in example 1 was performed.

<Comparative example 5>

A battery was produced in the same manner as in comparative example 1 except that, in the synthesis of the positive electrode active material, the base composition of the nickel cobalt manganese complex oxide was changed to $Li_{1.04}Ni_{0.33}Co_{0.33}Mn_{0.28}Ti_{0.01}O_2$, and the same performance evaluation as in comparative example 1 was performed.

<Comparative example 6>

A battery was produced in the same manner as in example 1 except that, in the synthesis of the positive electrode active material, the base composition of the nickel cobalt manganese complex oxide was changed to $Li_{1.04}Ni_{0.33}Co_{0.33}Mn_{0.28}Ti_{0.01}O_2$ and except that, in production of the negative electrode, a single layer of negative electrode mix layer was formed on both surfaces of the negative electrode collector by using a slurry in which the first negative electrode mix slurry and the second negative electrode mix slurry were mixed at a mass ratio of 2:1, and the same performance evaluation as in example 1 was performed.

<Comparative example 7>

A battery was produced in the same manner as in example 1 except that, in the synthesis of the positive electrode active material, the base composition of the nickel cobalt manganese complex oxide was changed to $Li_{1.04}Ni_{0.33}Co_{0.33}Mn_{0.28}Ti_{0.01}O_2$, and the same performance evaluation as in example 1 was performed.

<Comparative example 8>

A battery was produced in the same manner as in comparative example 1 except that, in the synthesis of the positive electrode active material, the base composition of the nickel cobalt manganese complex oxide was changed to $Li_{1.01}Ni_{0.83}Co_{0.05}Mn_{0.10}Ti_{0.01}O_2$, and the same performance evaluation as in comparative example 1 was performed.

<Comparative example 9>

A battery was produced in the same manner as in example 3 except that, in the preparation of the positive electrode active material, $TiO_2$ was not added and except that, in production of the negative electrode, a single layer of negative electrode mix layer was formed on both surfaces of the negative electrode collector by using a slurry in which the first negative electrode mix slurry and the second negative electrode mix slurry were mixed at a mass ratio of 2:1, and the same performance evaluation as in example 3 was performed.

<Comparative example 10>

A battery was produced in the same manner as in example 3 except that, in production of the negative electrode, a single layer of negative electrode mix layer was formed on both surfaces of the negative electrode collector by using a slurry in which the first negative electrode mix slurry and the second negative electrode mix slurry were mixed at a mass ratio of 2:1, and the same performance evaluation as in example 3 was performed.

<Comparative example 11>

A battery was produced in the same manner as in example 3 except that, in preparation of the first negative electrode mix slurry and the second negative electrode mix slurry, the carbon-based negative electrode active material in which carbon material A and carbon material B were mixed at a mass ratio of 2:1 was used, and the same performance evaluation as in example 3 was performed.

<Comparative example 12>

A battery was produced in the same manner as in example 3 except that, in the preparation of the first negative electrode mix slurry, carbon material A, $SiO_x$, CMC-Na, a dispersion of SBR, and a dispersion of PAA were mixed at a solid content mass ratio of 94:6:1:0.67:0.83 and except that, in the preparation of the second negative electrode mix slurry, carbon material B, $SiO_x$, CMC-Na, a dispersion of SBR, and a dispersion of PAA were mixed at a solid content mass ratio of 94:6:1:0.67:0.83, and the same performance evaluation as in example 3 was performed.

<Comparative example 13>

A battery was produced in the same manner as in example 4 except that, in the preparation of the positive electrode active material, $TiO_2$ was not added and except that, in production of the negative electrode, a single layer of negative electrode mix layer was formed on both surfaces of the negative electrode collector by using a slurry in which the first negative electrode mix slurry and the second negative electrode mix slurry were mixed at a mass ratio of 2:1, and the same performance evaluation as in example 4 was performed.

[Table 1]

| | Positive electrode (active material) | | Negative electrode | | | | Resistance increasing rate after storage |
|---|---|---|---|---|---|---|---|
| | Lattice shrinkage | Ti | Mixing ratio C/SiOx/CMC/SBR/PAA | Difference in PAA concentration | Difference in amorphous carbon ratio | D-band/G-band | |
| Comparative example 1 | 98.5 | none | 94:6:1:1:1 | - (single layer) | - (single layer) | 0.19 | 100 |
| Comparative example 2 | 98.5 | yes | 94:6:1:1:1 | - (single layer) | - (single layer) | 0.19 | 115 |
| Comparative example 3 | 98.5 | yes | first layer 94:6:1:1:1.5 second layer 94:6:1:1:0 | first layer > second layer | first layer = second layer | 0.19 | 98 |
| Comparative example 4 | 98.5 | yes | first layer 94:6:1:1:1 second layer 94:6:1:1:1 | first layer = second layer | first layer < second layer | A:0.09, B:0.39 B/A:4.3 | 98 |
| Comparative example 5 | 99.5 | none | 94:6:1:1:1 | - (single layer) | - (single layer) | 0.19 | 97 |
| Comparative example 6 | 99.5 | yes | first layer 94:6:1:1:1.5 second layer 94:6:1:1:0 | first layer > second layer | first layer = second layer | 0.19 | 100 |
| Comparative example 7 | 99.5 | yes | first layer 94:6:1:1:1.5 second layer 94:6:1:1:0 | first layer > second layer | first layer < second layer | A:0.09, B:0.39 B/A:4.3 | 98 |
| Comparative example 8 | 93.7 | none | 94:6:1:1:1 | - (single layer) | - (single layer) | 0.19 | 105 |
| Comparative example 9 | 98.5 | none | 94:6:1:0.67:0.83 | - (single layer) | - (single layer) | 0.19 | 102 |
| Comparative example 10 | 98.5 | yes | 94:6:1:0.67:0.83 | - (single layer) | - (single layer) | 0.19 | 112 |
| Comparative example 11 | 98.5 | yes | first layer 91:9:0.85:1:1 second layer 100:0:1.3:0:0.5 | first layer > second layer | first layer = second layer | 0.19 | 101 |
| Comparative example 12 | 98.5 | yes | first layer 94:6:1:0.67:0.83 second layer 94:6:1:0.67:0.83 | first layer = second layer | first layer < second layer | A:0.09, B:0.39 B/A:4.3 | 100 |
| Comparative example 13 | 98.5 | none | 94:6:1:0.67:0.83 | - (single layer) | - (single layer) | 0.22 | 104 |

(continued)

| | Positive electrode (active material) | | Negative electrode | | | | Resistance increasing rate after storage |
|---|---|---|---|---|---|---|---|
| | Lattice shrinkage | Ti | Mixing ratio C/SiOx/CMC/SBR/PAA | Difference in PAA concentration | Difference in amorphous carbon ratio | D-band/G-band | |
| Example 1 | 98.5 | yes | first layer 94:6:1:1:1.5 second layer 94:6:1:1:0 | first layer > second layer | first layer < second layer | A:0.09, B:0.39 B/A:4.3 | 87 |
| Example 2 | 93.7 | yes | first layer 94:6:1:1:1.5 second layer 94:6:1:1:0 | first layer > second layer | first layer < second layer | A:0.09, B:0.39 B/A:4.3 | 82 |
| Example 3 | 98.5 | yes | first layer 91:9:0.85:1:1 second layer 100:0:1.3:0:0.5 | first layer > second layer | first layer < second layer | A:0.09, B:0.39 B/A:4.3 | 88 |
| Example 4 | 98.5 | yes | first layer 91:9:0.85:1:1 second layer 100:0:1.3:0:0.5 | first layer > second layer | first layer < second layer | A:0.09, B:0.47 B/A:5.2 | 84 |

As shown in Table 1, the battery of every example exhibited a lower resistance increasing rate after storage at a high temperature than the batteries of the comparative examples.

Reference Signs List

10 nonaqueous electrolyte secondary battery
11 positive electrode
12 negative electrode
13 separator
14 electrode body
15 battery case
16 outer jacket can
17 sealing body
18, 19 insulating plate
20 positive electrode lead
21 negative electrode lead
22 overhanging portion
23 filter
24 lower valve body
25 insulating member
26 upper valve body
27 cap
28 gasket
30 negative electrode collector
31 negative electrode mix layer
32 first layer
33 second layer
34 first carbon-based negative electrode active material
35 second carbon-based negative electrode active material
36 PAA

**Claims**

1.  A nonaqueous electrolyte secondary battery comprising a positive electrode containing a positive electrode active material, a negative electrode including a negative electrode mix layer disposed on a negative electrode collector, and a nonaqueous electrolyte,
    wherein the positive electrode active material contains a titanium-containing lithium composite oxide that has a lattice shrinkage in charged state of 98.5% or less,
    the negative electrode mix layer contains a polyacrylic acid or a salt thereof and includes a first layer and a second layer disposed successively from the negative electrode collector,
    each of the first layer and the second layer contains a carbon-based negative electrode active material,
    the ratio (B/A) of the D-band/G-band ratio (B) of the Raman spectrum of the second layer to the D-band/G-band ratio (A) of the Raman spectrum of the first layer is 2 to 10, and
    the concentration of the polyacrylic acid or a salt thereof in the first layer is higher than the concentration of the polyacrylic acid or a salt thereof in the second layer.

2.  The nonaqueous electrolyte secondary battery according to Claim 1, wherein the thickness of the second layer is 20% to 70% of the thickness of the negative electrode mix layer.

3.  The nonaqueous electrolyte secondary battery according to Claim 1 or Claim 2, wherein the second layer contains substantially no polyacrylic acid nor salt thereof.

4.  The nonaqueous electrolyte secondary battery according to any one of Claims 1 to 3, wherein the first layer contains a silicon compound.

# Figure 1

# Figure 2

**EP 3 761 428 A1**

<table>
<tr><td colspan="2">INTERNATIONAL SEARCH REPORT</td><td>International application No.<br>PCT/JP2019/004945</td></tr>
</table>

A. CLASSIFICATION OF SUBJECT MATTER

Int.Cl. H01M10/052(2010.01)i, H01M4/131(2010.01)i, H01M4/133(2010.01)i,
        H01M4/136(2010.01)i, H01M4/36(2006.01)i, H01M4/48(2010.01)i,
        H01M4/485(2010.01)i, H01M4/505(2010.01)i, H01M4/525(2010.01)i,
        H01M4/58(2010.01)i, H01M4/587(2010.01)i, H01M4/62(2006.01)i

According to International Patent Classification (IPC) or to both national classification and IPC

B. FIELDS SEARCHED

Minimum documentation searched (classification system followed by classification symbols)

Int.Cl. H01M10/052, H01M4/131, H01M4/133, H01M4/136, H01M4/36, H01M4/48,
        H01M4/485, H01M4/505, H01M4/525, H01M4/58, H01M4/587, H01M4/62

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2012-015051 A (HITACHI VEHICLE ENERGY, LTD.) 19 January 2012, claims, paragraphs [0008], [0034], [0035], [0038], examples (Family: none) | 1-4 |
| Y | JP 10-270013 A (JAPAN STORAGE BATTERY CO., LTD.) 09 October 1998, claims, paragraphs [0005], [0009] (Family: none) | 1-4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>22 March 2019 (22.03.2019) | Date of mailing of the international search report<br>02 April 2019 (02.04.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

17

**INTERNATIONAL SEARCH REPORT**

| | International application No. |
|---|---|
| | PCT/JP2019/004945 |

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2016/163115 A1 (TOYOTA INDUSTRIES CORPORATION) 13 October 2016, claims, paragraph [0047] & US 2018/0097223 A1, claims, paragraph [0054] | 4 |
| A | JP 2013-149403 A (HITACHI, LTD.) 01 August 2013, entire text (Family: none) | 1-4 |
| A | JP 2011-192610 A (HITACHI, LTD.) 29 September 2011, entire text (Family: none) | 1-4 |
| A | JP 11-126600 A (FUJI DENKI KAGAKU CO., LTD.) 11 May 1999, entire text (Family: none) | 1-4 |
| A | JP 2010-267540 A (PANASONIC CORP.) 25 November 2010, entire text (Family: none) | 1-4 |
| A | JP 2017-062911 A (GS YUASA INTERNATIONAL LTD.) 30 March 2017, entire text (Family: none) | 1-4 |
| A | JP 2009-193924 A (NEC TOKIN CORPORATION) 27 August 2009, entire text (Family: none) | 1-4 |
| A | JP 2017-022076 A (TOYOTA MOTOR CORP.) 26 January 2017, entire text (Family: none) | 1-4 |

Form PCT/ISA/210 (continuation of second sheet) (January 2015)

**EP 3 761 428 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000348730 A
- JP 2004253305 A